# EUROPÄISCHE PATENTSCHRIFT

(11) **EP 3 191 375 B1**
(45) Veröffentlichungstag und Bekanntmachung des Hinweises auf die Patenterteilung: **18.12.2019**
(21) Anmeldenummer: 15749993.0
(22) Anmeldetag: 22.07.2015
(51) Int. Cl.: B65D 21/02

(54) **GEBINDE MIT WENIGSTENS ZWEI KLEBEND ANEINANDER HAFTENDEN ARTIKELN UND BEIDSEITIG KLEBENDES HAFTELEMENT ZUR VERWENDUNG HIERFÜR**
BUNDLE HAVING AT LEAST TWO ITEMS ADHESIVELY ADHERING TO EACH OTHER AND ATTACHMENT ELEMENT ADHESIVE ON BOTH SIDES FOR USE THEREFOR
EMBALLAGE COMPORTANT AU MOINS DEUX ARTICLES ADHÉRANT L'UN À L'AUTRE ET ÉLÉMENT ADHÉSIF DOUBLE FACE AFFÉRENT

(30) Priorität: 10.09.2014 DE 102014218117
(43) Veröffentlichungstag der Anmeldung: 19.07.2017
(73) Patentinhaber: Krones Aktiengesellschaft, 93073 Neutraubling (DE)
(72) Erfinder: NAPRAVNIK, Christian, 93073 Neutraubling (DE)
(74) Vertreter: Benninger, Johannes
(86) Internationale Anmeldenummer: PCT/EP2015/066707
(87) Internationale Veröffentlichungsnummer: WO 2016/037748

(56) Entgegenhaltungen:
- US-A- 3 902 992
- US-A1- 2014 272 233

## Beschreibung

Die vorliegende Erfindung betrifft ein beidseitig klebendes Haftelement in Verwendung mit einem Gebinde mit wenigstens zwei aneinander haftender Artikel oder Behälter mit den Merkmalen des Anspruchs 1, sowie ein mit diesem Haftelement hergestelltes Gebinde.

Für viele Anwendungsfälle ist es wünschenswert, einzelne Artikel zu handlichen und tragbaren Gebinden mit mehreren Artikeln zusammenzufassen. Derartige Gebinde sind besonders für den Handel geeignet, der sich an den Endverbraucher richtet. Sollen bspw. Artikel wie Getränkebehälter zu Gebinden zusammengefasst werden, so ist es in der Regel notwendig, zuvor mehrere Artikel jeweils zu gruppieren und anschließend mit Hilfe von geeigneten Umverpackungen zu Umreifungs- oder Schrumpfgebinden zusammenzufassen.

Neben bekannten Schrumpfgebinden, bei denen mehrere Artikel mit einer schrumpfbaren Folie umhüllt sind, werden zunehmend Umreifungsgebinde eingesetzt, bei denen mehrere Artikel mittels wenigstens eines horizontalen Umreifungsbandes zusammengefasst sind. Alle diese Verbindungen, seien es Folienumhüllungen oder Umreifungen, sind als sog. Umverpackungen jeweils entfernbar oder lösbar, so dass einzelne Artikel zum Zwecke ihrer separaten Verwendung vom Gebinde getrennt werden können. Normalerweise wird dabei das Gebinde zerlegt, da die Artikel nicht mehr zusammengehalten werden.

Das Zusammenkleben von Artikeln mit der Möglichkeit, den Klebstoff wieder zu entfernen, ist z.B. aus Zeitschriften bekannt, wo oftmals Karten oder Probentütchen eingeklebt sind. In der Getränkeindustrie werden derartige Klebeverbindungen bspw. zur Befestigung von Zusatzartikeln am Gebinde oder Behälter wie z.B. von Strohhalmen o. dgl. benutzt.

Aus der WO 2013/079134 A1 sind Klebegebinde bekannt, die durch aneinander geklebte Getränkebehälter gebildet sind. Das Haft- oder Klebemittel, das an Behältermantelflächen aufgetragen wird, kann ein niedrigviskoser Klebstoff sein, der insbesondere mittels Bestrahlung mit ultravioletter Strahlung ausgehärtet werden kann. Das Haft- oder Klebemittel kann an allen Kontakt- oder Berührflächen der Behälter aufgetragen werden, so dass relativ stabile Gebinde mit z.B. vier, sechs oder mehr Behältern gebildet werden können. Darüber hinaus sind als Haft- oder Klebemittel sog. Mehrschichtmaterialien offenbart, z.B. solcher aus einem beschichteten, zweiseitig haftend oder klebend aktiven Trägermaterial, das Klebeverbindungen zwischen Behältern ermöglicht.

Die US 3,902,992 A zeigt ein herkömmliches Haftelement und ein solches Klebegebinde, bei welchem die haftende Verbindung mittels eines dreischichtigen Haftmittels hergestellt wird, dessen mittlere Schicht aus einem schaumartigen Material besteht, welche beim Trennen der Behälter auf eine Weise zerstört wird, dass die an den Behälterflächen zurückbleibenden, unregelmäßigen Materialreste die Griffigkeit des jeweiligen Behälters erhöhen.

Ein vorrangiges Ziel der Erfindung besteht darin, ein Gebinde mit wenigstens zwei aneinander haftenden Artikeln zur Verfügung zu stellen, bei dem die Haftkräfte für den zuverlässigen mechanischen Zusammenhalt der Artikel im Gebindeverbund einerseits exakt definierbar sind, und bei dem andererseits einzelne Artikel leicht voneinander bzw. vom Gebindeverbund lösbar sind, ohne dass dieser dadurch aufgelöst bzw. aufgehoben wird.

Die Erfindung umfasst zur Erreichung des oben genannten Ziels ein beidseitig klebendes Haftelement, das in Verwendung mit einem Gebinde gemäß einer der zuvor beschriebenen Ausführungsvarianten zur klebenden und lösbaren Verbindung wenigstens zweier aneinander haftender Artikel an ihren Außenseiten und zur Ausbildung eines Gebindes mit mindestens zwei klebend aneinander haftenden Artikeln vorgesehen ist. Dieses erfindungsgemäße Haftelement umfasst wenigstens eine Trägerschicht sowie sich beidseitig flächig daran anschließende Haft- oder Klebeschichten zur Herstellung der haftenden Verbindungen zu den jeweiligen Außenseiten der aneinander gefügten Artikel. Außerdem ist vorgesehen, dass eine erste Adhäsionskraft zwischen den Artikelaußenseiten und den Haft- oder Klebeschichten des Haftelementes an den jeweiligen Haftstellen größer ist als eine zweite Adhäsionskraft zwischen den Haft- oder Klebeschichten und der dazwischen befindlichen Trägerschicht.Das Haftelement kann bspw. einen dreischichtigen oder einen fünfschichtigen Aufbau aufweisen, wie er zuvor beschrieben wurde.

Dieses Ziel der Erfindung wird weiterhin mit dem Gegenstand des abhängigen Anspruchs 2 erreicht. Merkmale vorteilhafter Weiterbildungen der Erfindung ergeben sich aus den abhängigen Ansprüchen. Zur Erreichung des genannten Ziels schlägt die Erfindung ein Gebinde mit mindestens zwei an Außenseiten klebend aneinander haftenden Artikeln vor, die mittels wenigstens eines beidseitig klebenden Haftelementes an wenigstens einer Haftstelle lösbar aneinander fixiert sind. Das Haftelement ist durch wenigstens eine Trägerschicht sowie sich beidseitig flächig daran anschließende Haft- oder Klebeschichten gebildet, welche jeweils die haftende Verbindung zu den jeweiligen Außenseiten der aneinander gefügten Artikel herstellen. Gemäß der Erfindung ist vorgesehen, dass eine erste Adhäsionskraft zwischen den Artikelaußenseiten und den Haft- oder Klebeschichten des Haftelementes an den jeweiligen Haftstellen größer ist als eine zweite Adhäsionskraft zwischen den Haft- oder Klebeschichten und der dazwischen befindlichen Trägerschicht. Die wenigstens eine Trägerschicht kann bspw. durch ein Kunststoffmaterial, insbesondere eine Kunststofffolie gebildet sein. Auch andere Materialien wie Gewebe, Gewirke o. dgl., oder auch biologisch abbaubare Materialien eignen sich als Trägerschicht. Darüber hinaus kann sich auch ein geschäumtes Material als Trägerschicht eignen.

Das erfindungsgemäße Gebinde kann insbesondere durch Gruppieren von Artikeln wie Flaschen bzw. Behältern hergestellt werden, die an den Berührungspunkten oder den Punkten mit dem geringsten Abstand voneinander mit einer wieder lösbaren Klebeverbindung zusammengefügt werden. Dabei ist es wichtig, dass diese Klebeverbindung stark genug ist, um bei normaler Handhabung des Gebindes dessen mechanische Widerstandsfähigkeit und Stabilität zu gewährleisten, jedoch schwach genug, um die Gebinde wieder in Flaschen oder Behälter vereinzeln zu können. Für eine leichtere Vereinzelung können wahlweise auch Lösungshilfen wie z.B. eine Zuglasche o. dgl. in die Klebeverbindung eingebracht werden.

Diese als Lösungshilfe dienende Zuglasche kann insbesondere durch eine Drahtschlaufe oder Kunststoffschnur gebildet oder mit einer solchen verbunden sein, die in die Klebeverbindung eingelegt ist und beim Ziehen die Klebeschicht durchdringt, zerschneidet oder zerstört und damit aufhebt, so dass die Artikel voneinander getrennt werden können. In diesem Fall ist die mit dem Griffelement versehene Trennhilfe bspw. mit einem in eine der flächigen Schichten eingelegten Zugfaden oder einer darin eingelegten Schlaufe verbunden, der/die beim Lösen der Trennhilfe vom Haftelement in einer gegebenen Zugrichtung - insbesondere parallel zur Flachseite des Haftelementes - die jeweilige flächige Schicht zumindest teilweise auftrennt und/oder zerstört, so dass die Behälter oder Artikel leicht voneinander gelöst werden können.

Auch eine definierte, vorzugsweise ebene Klebestelle am Behälter ist vorstellbar. Bei Artikeln oder Behältern mit herkömmlichen Mantelflächen, die jeweils runde Querschnitte mit ggf. über ihrer Höhe veränderlichen Durchmessern aufweisen, kann es sinnvoll sein, Haftelemente zu verwenden, bei denen die wenigstens eine Trägerschicht zumindest einseitig konkav geformt und/oder in ihrem Querschnitt an eine konvexe Kontaktstelle mit wenigstens einer Außenseite eines Artikels oder Behälters angepasst ist. Sinnvollerweise ist die Trägerschicht beidseitig konkav geformt, so dass sie sich in optimaler Weise an die konvexen Artikel- oder Behälteraußenseiten anpassen kann. Bei ausreichend dünner Haft- oder Klebeschicht passt sich diese an die konkave Trägerschicht an. Alternativ oder zusätzlich kann jedoch auch vorgesehen sein, dass zumindest eine der wenigstens zwei sich an die Trägerschicht anschließenden Haft- oder Klebeschichten des Haftelementes konkav geformt und/oder in ihrem Querschnitt an eine konvexe Kontaktstelle mit wenigstens einer Außenseite eines Artikels angepasst ist. Sinnvollerweise sind auch hier beide Seiten des Haftelementes in entsprechender Weise konkav geformt, so dass eine optimale Anpassung an die konvexen Artikel- oder Behälteraußenseiten gegeben ist. Eine solche einseitig oder beidseitig konkave Querschnittskontur des Trägermaterials kann bspw. durch Verwendung von geschäumten Materialien realisiert werden.

Besonders vorteilhaft an dem erfindungsgemäßen Gebinde ist die einfache Herstellbarkeit, wobei für die Herstellung nur sehr wenig Energieaufwand erforderlich ist. Es werden zudem Gebinde mit äußerst geringen Verpackungskosten zur Verfügung gestellt. Zudem ist eine große Variantenvielfalt möglich, da eine große Vielzahl von Gebindekonstellationen ermöglicht ist. Je nach eingesetzten Haft- oder Klebeschichten können deren Hafteigenschaften gezielt beeinflusst bzw. definiert werden, so dass bspw. auch eine ausgeprägte Temperaturwechselbeständigkeit der Klebeverbindung gewährleistet werden kann. Die Haltbarkeit der Klebeverbindung beim Handling der Gebinde kann gewährleistet werden, ebenso die leichte Lösbarkeit der Verbindung unter allen bekannten Endkundenbedingungen, und zwar unabhängig von den herrschenden Temperaturverhältnissen. Die erreichbare Stabilität des Gebindes wird zwar grundsätzlich von der Behälterform mitbeeinflusst, doch kann dies durch verschiedene Konturen, Stärken bzw. veränderliche Querschnitte des Haftelementes ausgeglichen werden. Unter Umständen ist eine Vorbehandlung (z.B. Trocknung) der Klebestelle am Behälter notwendig, doch kann dies normalerweise entfallen, da bei Verwendung entsprechend ausgestatteter Applikationsvorrichtungen auch auf noch feuchten Behältern eine ausreichend feste Klebeverbindung gewährleistet werden kann. Zu diesem Zweck kann die Applikationseinrichtung bspw. mit Blasdüsen für heiße Trocknungsluft o. dgl. ausgestattet sein, so dass Restfeuchte weitestgehend beseitigt werden kann, bevor das Haftelement aufgebracht wird.

Eine weitere Variante des erfindungsgemäßen Gebindes kann vorsehen, dass das Haftelement wenigstens fünf aneinander haftende flächige Schichten umfasst, wobei sich an eine innere Haft- oder Klebeschicht beidseitig Trägerschichten anschließen, an deren Außenseiten sich jeweils die äußere Haft- oder Klebeschichten befinden, die den klebenden Kontakt zu den Außenseiten der Artikel herstellen. Hierbei ist vorzugsweise vorgesehen, dass eine dritte Adhäsionskraft zwischen der inneren Haft- oder Klebeschicht und den sich jeweils daran anschließenden Trägerschichten kleiner ist als die erste Adhäsionskraft zwischen den Artikelaußenseiten und den äußeren Haft- oder Klebeschichten des Haftelementes an den jeweiligen Haftstellen. So kann als Haftelement insbesondere ein Mehrschichtklebestreifen zur Verklebung der Gebinde verwendet werden. Bei der Verwendung solcher Klebestreifen kann als Träger bei einer dreischichtigen Ausführung ein Material verwendet werden, welches eine schwächere Verbindung zum Klebstoff herstellt als das für die Behältermantel typischerweise eingesetzte PET. Bei einer fünfschichtigen Ausführung kann dies durch einen zweiten Klebstoff erreicht werden. Der Klebstoff zur Flasche hin kann vorzugsweise eine sehr starke Verbindung erzeugen, da zum Lösen die Klebeverbindung zwischen den beiden Trägerwerkstoffen dient. So ist vorzugsweise vorgesehen, dass die dritte Adhäsionskraft zwischen der inneren Haft- oder Klebeschicht und den sich jeweils daran anschließenden Trägerschichten kleiner ist als die zweite Adhäsionskraft zwischen den Haft- oder Klebeschichten und den sich jeweils daran anschließenden Trägerschichten.

Wahlweise kann im Bereich des Haftelementes eine flächige Schicht als Trennhilfe ausgebildet und mit einem Griffelement versehen sein, das als Zuggriff zum Lösen der Trennhilfe vom Haftelement in einer Zugrichtung quer zum Schichtaufbau und parallel zu den flächigen Schichten ausgebildet sein kann. Insbesondere bei einem Einsatz des fünfschichtigen Klebematerials kann eine solche Lösungshilfe eingearbeitet werden.

Wahlweise kann die Trennhilfe auch als zusätzliche vierte bzw. sechste Schicht ausgebildet sein. Außerdem sind Varianten denkbar, bei denen die wenigstens eine Trägerschicht oder eine der Trägerschichten als Trennhilfe ausgebildet und mit einem Griffelement ausgestattet ist, das durch Ziehen die Artikel voneinander trennen kann.

Das Trägermaterial kann wahlweise einen schwach konkaven Querschnitt aufweisen, was z.B. durch Pressen bei der Konfektionierung erfolgen kann. Auch kann das Haftelement flexibel bzw. geschäumt ausgeführt werden, um runde Flaschen besser fassen zu können bzw. die Klebestelle zu optimieren.

Das optionale Löseelement bzw. die optional zu verstehende Lösungshilfe kann bspw. als eingearbeitet Zuglasche o. dgl. ausgebildet sein, die durch Zug die Klebeschichten von der Trägerschicht trennt bzw. die die Trägerschicht aus dem Klebeverbund herauszieht. Als Haftschichten können unterschiedliche Kleberschichten eingesetzt werden. Die Haftelemente können durch runde, ovale oder mehreckige Klebeetiketten gebildet sein. Auch die Verwendung von länglichen Klebestreifen ist denkbar, die bspw. eine vertikale Erstreckung entlang der Linienberührungen zwischen benachbarten Artikeln oder Flaschen aufweisen können. Wahlweise können mehrere solche Haftelemente für jede Verbindung zwischen benachbarten Artikeln oder Flaschen verwendet werden. Trägerschichten aus geschäumten Materialen erleichtern eine gewünschte Konturierung, um bspw. runde Flaschen besser fassen zu können bzw. die Klebestelle zu optimieren. Ggf. kann es auch sinnvoll sein, in die Behälter definierte ebene Verbindungsstelle einzuarbeiten, was z.B. beim Streckblasen der Flaschen bereits berücksichtigt sein kann.

Es sei an dieser Stelle darauf hingewiesen, dass die oben erwähnten Artikel des Gebindes wahlweise Behälter, Flüssigkeitsbehälter, Getränkebehälter, PET-Behälter o. dgl. sein können. Wenn also von Artikeln die Rede ist, so kann jeweils eines dieser Synonyme verwendet oder der Begriff des Artikels durch eines dieser Synonyme ausgetauscht werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht eines Gebindes mit mehreren Getränkebehältern, die haftend aneinander fixiert sind.
Fig. 2 zeigt eine schematische Draufsicht auf ein 3x2-Rechteckgebinde, bei dem insgesamt sechs Getränkebehälter haftend miteinander verbunden sind.
Fig. 3 zeigt zwei schematische Seitenansichten eines mehrschichtigen Haftelementes, wie es zur Verbindung der Getränkebehälter aneinander verwendet werden kann.
Fig. 4 zeigt zwei schematische Seitenansichten einer weiteren Variante eines mehrschichtigen Haftelementes, wie es zur Verbindung der Getränkebehälter aneinander verwendet werden kann.
Fig. 5 zeigt zwei schematische Seitenansichten weiterer Varianten eines mehrschichtigen Haftelementes, das mit einer zusätzlichen Lösehilfe mit Griffschlaufe versehen ist.
Fig. 6 zeigt in einer schematischen Seitenansicht eine weitere Variante eines mehrschichtigen Haftelementes, das beidseitig konkav geformt ist.
Fig. 7 eine weitere alternative Gestaltungsvariante eines Flüssigkeitsbehälters in zwei Ansichten.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

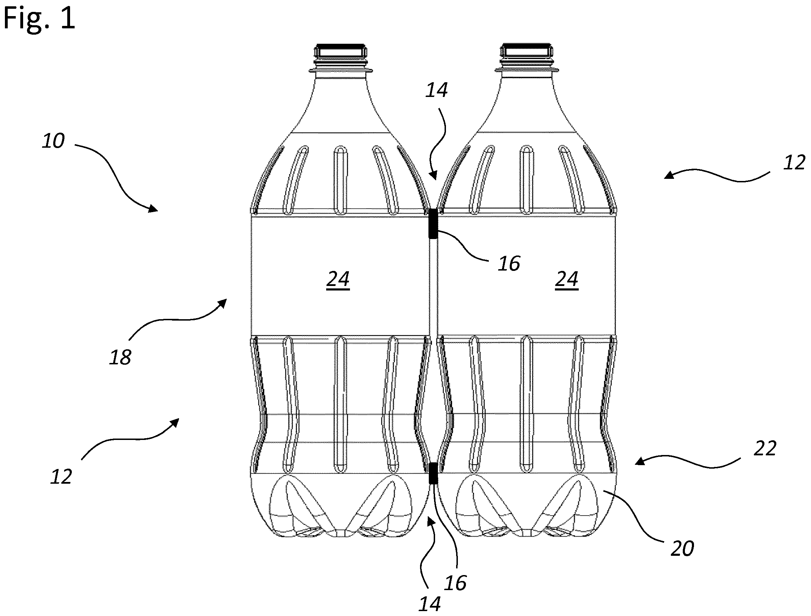

Die schematische Seitenansicht der Fig. 1 zeigt eine Ausführungsvariante eines erfindungsgemäßen Gebindes 10, das durch wenigstens zwei aneinander stehende Getränkebehälter 12 gebildet ist, die an ihren Berührflächen 14 jeweils durch beidseitig klebende Haftelemente 16 lösbar aneinander fixiert sind. Da die beispielhaft dargestellten Getränkebehälter 12 jeweils nur in einem oberen Bereich 18 abschnittsweise zylindrisch geformt sind, während sie nach unten hin eingeschnürt und oberhalb des Bodenbereichs 20 wieder erweitert sind, eignen sich aufgrund einer fehlenden Linienberührung nicht alle Bereich der Getränkebehälter 12 zur Platzierung von beidseitig klebenden Haftelementen 16. Eine komplett hohlzylindrische Flasche könnte bspw. auch mit einem von oben nach unten verlaufenden Haftstreifen mit einer zweiten Flasche verbunden werden.

Bei der Behälterform gemäß Fig. 1 ist es sinnvoll, zumindest ein oberes Haftelement 16 im oberen zylindrischen Bereich 18 der Behälter 12 anzuordnen sowie ggf. ein weiteres Haftelement 16 im verbreiterten Bereich 22 oberhalb des Bodenbereichs 20. Der zylindrische obere Bereich 18 der Behälter 12 eignet sich zudem als Griff-, Bedruckungs- und/oder Etikettierbereich 24, wo entweder Etiketten angebracht oder wo Beschriftungen, Bilder etc. aufgedruckt werden können.

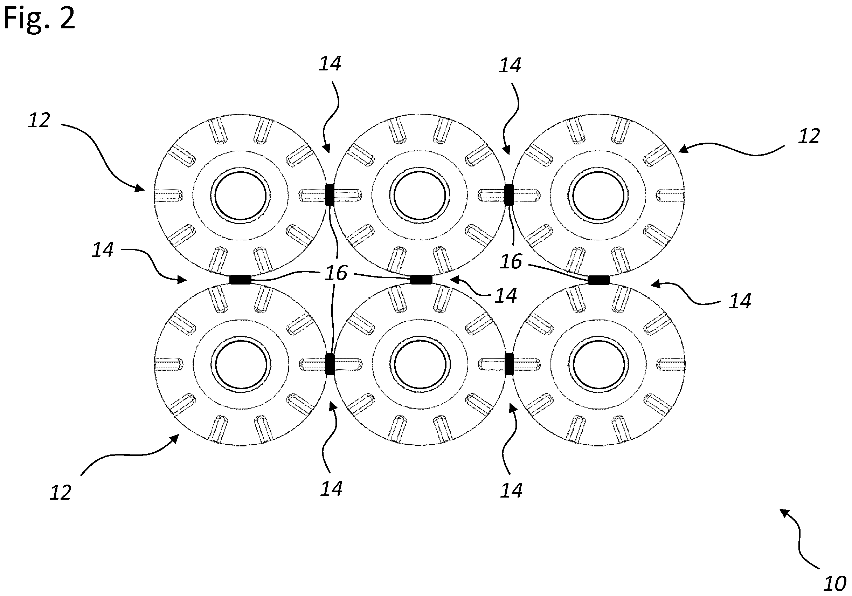

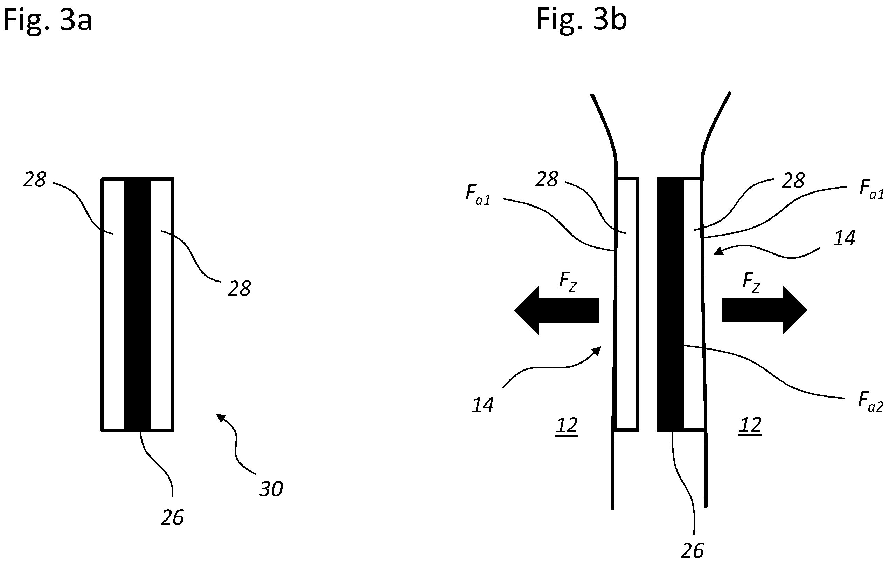

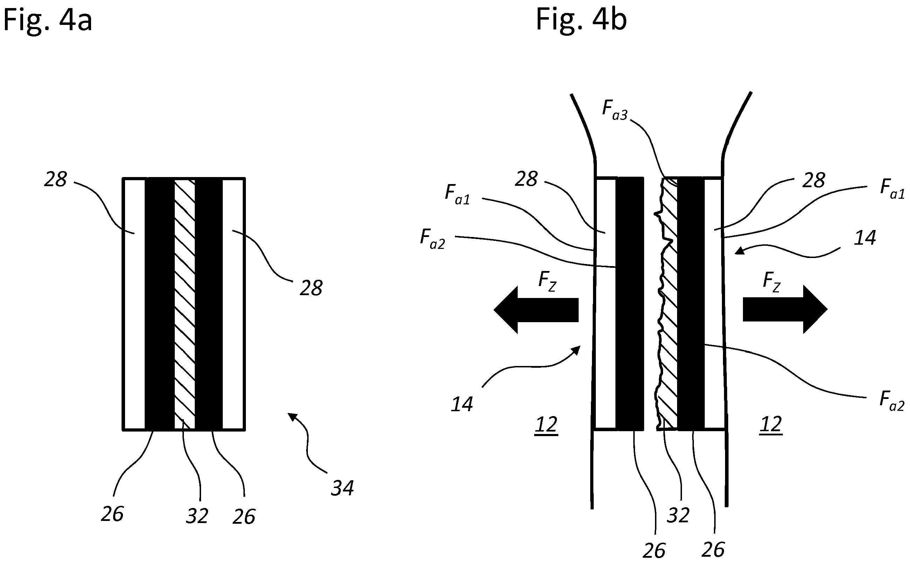

Die schematische Draufsicht der Fig. 2 zeigt eine Ausführungsvariante des Gebindes 10 gemäß Fig. 1, bei dem insgesamt sechs Getränkebehälter 12 an insgesamt sieben aneinander grenzenden Kontaktstellen bzw. Berührflächen der Behälter 12 untereinander mittels sieben einzelnen beidseitig klebenden Haftelementen 16 oder von sieben Paaren (vgl. Fig. 1) solcher beidseitig klebender Haftelemente 16 lösbar aneinander fixiert sind. Es handelt sich dabei um ein Gebinde 10 mit einer sog. 3x2-Rechteck-Gruppierung. Der Aufbau der Haftelemente 16 und der Vorgang der Trennung der Behälter 12 voneinander wird anhand der Figuren 3 und 4 näher erläutert.

Die schematische Detailansicht der Fig. 3a zeigt den Schichtaufbau einer ersten Variante eines erfindungsgemäßen Haftelementes 16, das durch eine Trägerschicht 26 sowie sich beidseitig flächig daran anschließende Haft- oder Klebeschichten 28 gebildet ist, die jeweils die haftende Verbindung zu den jeweiligen Berührflächen 14 der aneinander gefügten Behälter 12 herstellen. Gemäß der vorliegenden Erfindung ist eine erste Adhäsionskraft Fₐ₁ zwischen den Kontaktflächen der Behälter 12 und den Haft- oder Klebeschichten 28 des Haftelementes 16 an den jeweiligen Haftstellen größer ist als eine zweite Adhäsionskraft Fₐ₂ zwischen den Haft- oder Klebeschichten 28 und der dazwischen befindlichen Trägerschicht 26.

Die Fig. 3b zeigt die Vorgänge beim Auseinanderziehen zweier aneinander haftender Behälter 12, die durch ein dreischichtiges Haftelement 16 aneinander fixiert sind. Den gegeneinander gerichteten Zugkräften F_{Z} an den beiden Behältern 12 wirken die genannten Adhäsionskräfte entgegen. Aufgrund der größeren Adhäsionskräfte zwischen den Haft- oder Klebeschichten 28 und den Behälteraußenseiten wird eine der beiden Grenzschichten zwischen der mittigen Trägerschicht 26 und den angrenzenden Haft- oder Klebeschichten 28 zuerst aufgetrennt, wie es die Fig. 3b verdeutlicht, nicht jedoch die Grenzschicht zwischen der Haft- oder Klebeschicht 28 und der Berührfläche 14 am Behälter 12. Aufgrund der größeren ersten Adhäsionskräfte Fₐ₁ bleiben die Haftverbindungen der Schichten 28 an den Behältern 12 erhalten, während eine der beiden Haftschichten 28 - in der gezeigten Variante der Fig. 3b die linke - von der Trägerschicht 26 getrennt wird. Diese kleinere zweite Adhäsionskraft Fₐ₂ wird aufgehoben, während die zweite Grenzschichtverbindung an der rechten Seite erhalten bleiben kann; die Trägerschicht 26 verbleibt somit an der rechten Haft- oder Klebeschicht 28 des rechten der beiden Behälter 12.

Die schematische Darstellung der Fig. 3b lässt erkennen, dass es sich bei der bevorzugt auftrennbaren Verbindung zwischen den Schichten 26 und 28 um eine definierte Sollbruchstelle handelt, die das Trennen zweier Behälter 12 voneinander mit definierten Zugkräften F_{Z} erlaubt.

Wie es die Figuren 3a und 3b zeigen, kann das Haftelement 16 durch einen Mehrschichtklebestreifen 30 zur Verklebung der Behälter 12 im Gebinde 10 gebildet sein. Bei der Verwendung solcher Klebestreifen 30 kann als Träger 26 bei der gezeigten dreischichtigen Ausführung ein Material verwendet werden, welches eine schwächere Verbindung zur Klebstoffschicht 28 herstellt als das für die Behältermantel typischerweise eingesetzte PET, so dass die Ablösung der Behälter 12 voneinander entsprechend Fig. 3b stattfinden kann.

Die schematische Detailansicht der Fig. 4a zeigt den Schichtaufbau einer zweiten Variante des Haftelementes 16, das insgesamt zwei Trägerschichten 26 sowie sich außen beidseitig flächig daran anschließende Haft- oder Klebeschichten 28 aufweist, die jeweils die haftende Verbindung zu den jeweiligen Berührflächen 14 der aneinander gefügten Behälter 12 herstellen. Allerdings weist das in den Figuren 4a und 4b gezeigte Haftelement 16 insgesamt fünf aneinander haftende flächige Schichten 26, 28 und 32 auf, wobei sich an eine innere Haft- oder Klebeschicht 32 beidseitig Trägerschichten 26 anschließen, an deren Außenseiten sich jeweils die äußere Haft- oder Klebeschichten 28 befinden, die den klebenden Kontakt zu den Berührstellen 14 der Behälter 12 herstellen. Bei dieser zweiten Variante des Haftelementes 16 ist eine dritte Adhäsionskraft Fₐ₃ zwischen der inneren Haft- oder Klebeschicht 32 und den sich jeweils daran anschließenden Trägerschichten 26 kleiner ist als die erste Adhäsionskraft Fₐ₁ zwischen den Artikelaußenseiten bzw. den Berührstellen 14 der Behälter 12 und den äußeren Haft- oder Klebeschichten 28 des Haftelementes 16 an den jeweiligen Haftstellen.

Wiederum kann als Haftelement ein geeigneter Mehrschichtklebestreifen 34 zur Verklebung der Gebinde 10 verwendet werden. Bei der Verwendung dieser Klebestreifen 34 kann als Träger 26 bei einer fünfschichtigen Ausführung ein Material verwendet werden, welches eine schwächere Verbindung zur inneren Haft- oder Klebeschicht 32 herstellt als das für die Behältermantel typischerweise eingesetzte PET. Bei der gezeigten fünfschichtigen Ausführung können unterschiedliche Klebstoffe für die Schichten 28 und 32 eingesetzt werden. Der Klebstoff 28 zu den Behältern 12 hin kann vorzugsweise eine sehr starke Verbindung erzeugen, da zum Lösen die innere Klebeverbindung 32 zwischen den beiden Trägerwerkstoffen 26 dient. Um dies zu erreichen, ist die dritte Adhäsionskraft Fₐ₃ zwischen der inneren Haft- oder Klebeschicht 32 und den sich jeweils daran anschließenden Trägerschichten 26 kleiner ist als die zweite Adhäsionskraft Fₐ₂ zwischen den äußeren Haft- oder Klebeschichten 28, die an die Behälter 12 grenzen und dort haften und den sich jeweils daran anschließenden Trägerschichten 26.

Die Fig. 4b zeigt die Vorgänge beim Auseinanderziehen zweier aneinander haftender Behälter 12, die durch ein fünfschichtiges Haftelement 16 bzw. den Klebestreifen 34 aneinander fixiert sind. Den gegeneinander gerichteten Zugkräften F_{Z} an den beiden Behältern 12 wirken die genannten Adhäsionskräfte entgegen. Da die Adhäsionskräfte Fₐ₃ zwischen der inneren Klebeschicht 32 und den daran beidseitig angrenzenden Trägerschichten 32 kleiner sind als die Adhäsionskräfte Fₐ₁ zwischen den Haft- oder Klebeschichten 28 und den Behälteraußenseiten als auch die Adhäsionskräfte Fₐ₂ zwischen den äußeren Haft- oder Klebeschichten 28 und den daran angrenzenden Trägerschichten 26, wird eine der beiden Grenzschichten zwischen der mittigen inneren Klebeschicht 32 und den daran angrenzenden Trägerschichten 26 zuerst aufgetrennt, wie es die Fig. 4b verdeutlicht, nicht jedoch die übrigen Grenzschichten zwischen der Haft- oder Klebeschicht 28 und der Berührfläche 14 am Behälter 12 oder zwischen den Trägerschichten 26 und den äußeren Haft- oder Klebeschichten 28.

Aufgrund der größeren ersten und zweiten Adhäsionskräfte Fₐ₁ und Fₐ₂ bleiben die Haftverbindungen der Schichten 28 an den Behältern 12 erhalten, während eine der beiden Trägerschichten 26 - in der gezeigten Variante der Fig. 4b die linke - von der inneren Klebeschicht 32 getrennt wird. Diese kleinere dritte Adhäsionskraft Fₐ₃ wird aufgehoben, während die zweite Grenzschichtverbindung an der rechten Seite ggf. erhalten bleiben kann; hierbei verbleibt die innere Klebeschicht 32 an der rechten Trägerschicht 26, die wiederum über ihre angrenzende Haft- oder Klebeschicht 28 am rechten der beiden Behälter 12 haftet.

Die schematische Darstellung der Fig. 4b lässt erkennen, dass es sich bei der bevorzugt auftrennbaren Verbindung zwischen den Schichten 26 und 32 um eine definierte Sollbruchstelle handelt, die das Trennen zweier Behälter 12 voneinander mit definierten Zugkräften F_{Z} erlaubt.

Wie es die Figuren 4a und 4b zeigen, ist das Haftelement 16 bei dieser Variante durch einen fünfschichtigen Klebestreifen 34 zur Verklebung der Behälter 12 im Gebinde 10 gebildet. Bei der Verwendung solcher Klebestreifen 34 kann als Träger 26 bei der gezeigten fünfschichtigen Ausführung ein Material verwendet werden, welches eine schwächere Verbindung zur inneren Klebstoffschicht 32 herstellt als zu den äußeren Klebeschichten 28, die an dem als Behältermantel typischerweise eingesetzten PET relativ stark haften, so dass die Ablösung der Behälter 12 voneinander entsprechend Fig. 4b stattfinden kann.

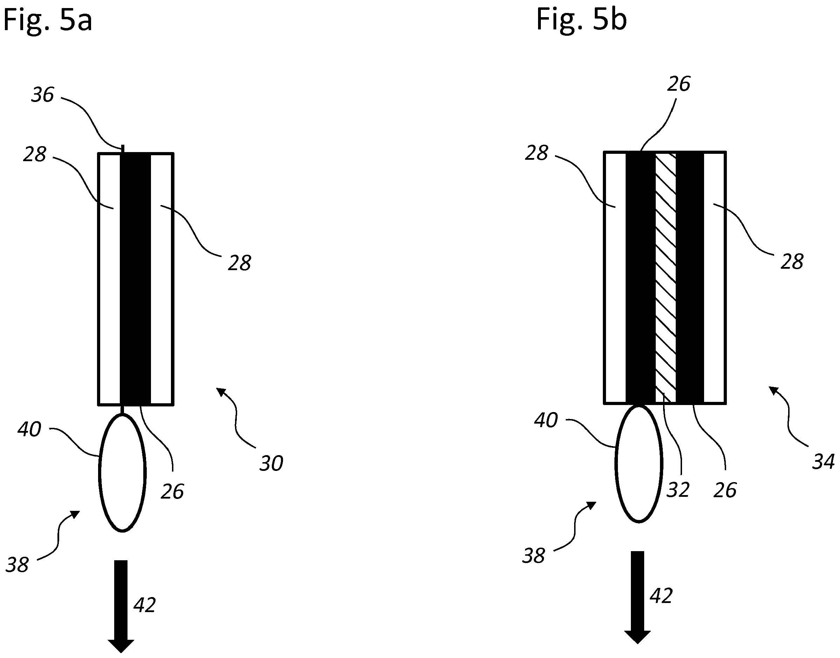

Die weitere Detailansicht der Fig. 5a zeigt eine Ausführungsvariante eines mehrschichtigen Klebestreifens 30, der im Bereich des Haftelementes 16 eine zusätzliche flächige Schicht 36 als Trennhilfe 38 ausgebildet und mit einem schlaufenartigen Griffelement 40 versehen ist, der als Zuggriff zum Lösen der Trennhilfe 38 vom Haftelement 16 in einer Zugrichtung 42 quer zum Schichtaufbau und parallel zu den flächigen Schichten 26, 28 und 36 ausgebildet sein kann.

Die Detailansicht der Fig. 5b zeigt eine entsprechende Ausführungsvariante bei einem fünfschichtigen Aufbau gemäß Fig. 4, wobei eine der beiden Trägerschichten 26 mit einem Griffelement 40 versehen ist, so dass diese Trägerschicht 26 in einer Zugrichtung 42 quer zum Schichtaufbau und parallel zu den flächigen Schichten 26, 28 und 32 nach unten abgezogen werden kann, wodurch die Schichten voneinander getrennt und die Klebeverbindung zwischen den aneinander grenzenden Behältern 12 aufgehoben werden kann.

Grundsätzlich besteht eine besonders sinnvolle Variante darin, diese Trennhilfe 38 durch eine Drahtschlaufe oder Kunststoffschnur zu bilden oder mit einer solchen zu verbinden, die in die Klebeverbindung bzw. in die entsprechenden Klebeschichten 32 oder 38 eingelegt ist und beim Ziehen am Griffelement die jeweilige Klebeschicht 32 oder 38 durchdringt, zerschneidet oder zerstört und damit aufhebt, so dass die Behälter 12 leicht voneinander getrennt werden können. In diesem Fall ist die zuvor erwähnte zusätzliche flächige Schicht 36 nicht erforderlich und kann entfallen.

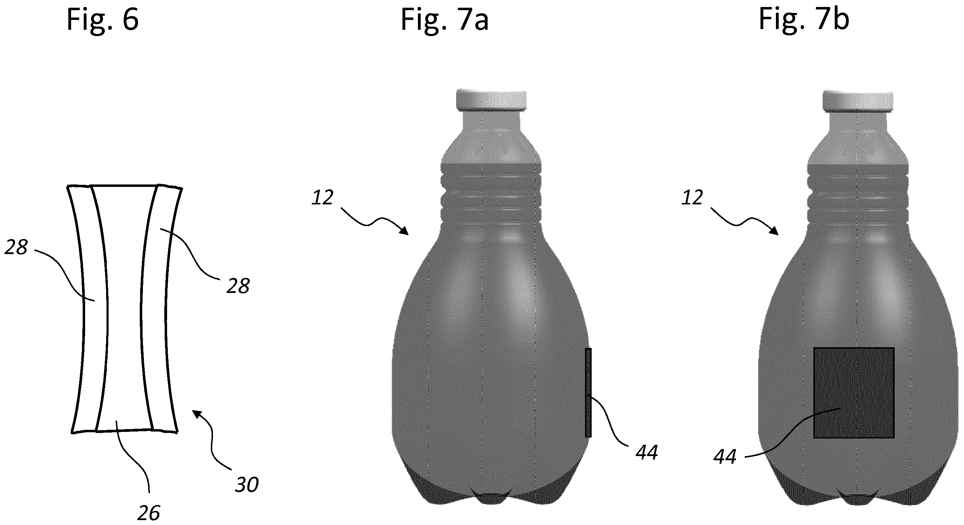

Die Fig. 6 zeigt eine alternative Ausführungsvariante des Haftelementes 16, dessen Trägerschicht 26 bspw. eine beidseitig konkave Wölbung aufweisen kann, so dass auch die sich beidseitig an die Trägerschicht 26 anschließenden Haft- oder Klebeschichten 28 jeweils konkav gewölbt sind, wodurch sie sich an entsprechend konvexe Behälterkonturen anpassen und eine bessere Haftverbindung herstellen können. Bei einer solchen Variante kann die Trägerschicht 16 bspw. aus geschäumtem Material bestehen, so dass sich ein entsprechender Mehrschichtklebestreifen 30 entsprechend Fig. 6 oder in ähnlicher Form ergeben kann.

In entsprechender Weise kann auch der fünfschichtige Klebestreifen 34 gemäß Fig. 4 bzw. Fig. 5b geformt sein.

Auch eine definierte, vorzugsweise ebene Verbindungsstelle 44 am Behälter 12 zur Aufnahme eines flachen Haftelementes 16 gemäß Fig. 7a (Seitenansicht) und Fig. 7b (Frontansicht) ist wahlweise möglich. Eine solche ebene Verbindungsstelle 44 im ansonsten bauchig oder konvex gewölbten Korpus des Behälters 12 kann vorzugsweise bereits beim Streckblasen der Flaschen oder Behälter 12 berücksichtigt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Gebinde, Klebegebinde
- 12: Behälter, Getränkebehälter, PET-Behälter, Artikel
- 14: Berührfläche, Kontaktfläche
- 16: Haftelement
- 18: oberer Bereich
- 20: Bodenbereich
- 22: verbreiterter Bereich
- 24: Etikettierbereich
- 26: Trägerschicht, Träger
- 28: Klebeschicht, Haftschicht, äußere Klebeschicht
- 30: Klebestreifen, Mehrschichtklebestreifen (insbesondere dreischichtig)
- 32: innere Klebeschicht, zweite Klebeschicht
- 34: Klebestreifen, Mehrschichtklebestreifen (insbesondere fünfschichtig)
- 36: zusätzliche Schicht, zusätzliche flächige Schicht
- 38: Trennhilfe
- 40: Griffelement
- 42: Zugrichtung
- 44: Verbindungsstelle, ebene Verbindungsstelle

- F_{Z}: Zugkraft
- Fₐ₁: erste Adhäsionskraft
- Fₐ₂: zweite Adhäsionskraft
- Fₐ₃: dritte Adhäsionskraft

## Patentansprüche

1. Beidseitig klebendes Haftelement (16) in Verwendung mit einem Gebinde (10) zur klebenden und lösbaren Verbindung wenigstens zweier aneinander haftender Artikel oder Behälter (12) an ihren Außenseiten zur Ausbildung eines Gebindes (10) mit mindestens zwei klebend aneinander haftenden Artikeln oder Behältern (12), wobei das Haftelement (16) wenigstens eine Trägerschicht (26) sowie sich beidseitig flächig daran anschließende Haft- oder Klebeschichten (28) zur Herstellung der haftenden Verbindungen zu den jeweiligen Außenseiten der aneinander gefügten Artikel oder Behälter (12) umfasst, **dadurch gekennzeichnet, dass** eine erste Adhäsionskraft (Fₐ₁) zwischen den Artikelaußenseiten und den Haft- oder Klebeschichten (28) des Haftelementes (16) an den jeweiligen Haftstellen größer ist als eine zweite Adhäsionskraft (Fₐ₂) zwischen den Haft- oder Klebeschichten (28) und der Trägerschicht (26).

2. Gebinde (10) mit mindestens zwei an Außenseiten klebend aneinander haftenden Artikeln oder Behältern (12), die mittels wenigstens eines beidseitig klebenden Haftelementes (16) gemäß Anspruch 1 an wenigstens einer Haftstelle lösbar aneinander fixiert sind.

3. Gebinde nach Anspruch 2, bei dem die wenigstens eine Trägerschicht (26) durch ein Kunststoffmaterial, insbesondere eine Kunststofffolie gebildet ist.

4. Gebinde nach Anspruch 2 oder 3, bei dem die wenigstens eine Trägerschicht (26) zumindest einseitig konkav geformt und/oder in ihrem Querschnitt an eine konvexe Kontaktstelle mit wenigstens einer Außenseite eines Artikels oder Behälters (12) angepasst ist.

5. Gebinde nach Anspruch 4, bei dem zumindest eine der wenigstens zwei sich an die Trägerschicht (26) anschließenden Haft- oder Klebeschichten (28) des Haftelementes (16) konkav geformt und/oder in ihrem Querschnitt an eine konvexe Kontaktstelle mit wenigstens einer Außenseite eines Artikels oder Behälters (12) angepasst ist.

6. Gebinde nach einem der Ansprüche 2 bis 5, bei dem das Haftelement (16) wenigstens fünf aneinander haftende flächige Schichten (26, 28, 32) umfasst, wobei sich an eine innere Haft- oder Klebeschicht (32) beidseitig Trägerschichten (26) anschließen, an deren Außenseiten sich jeweils die äußeren Haft- oder Klebeschichten (28) befinden, die den klebenden Kontakt zu den Außenseiten der Artikel oder Behälter (12) herstellen.

7. Gebinde nach Anspruch 6, bei dem eine dritte Adhäsionskraft (Fₐ₃) zwischen der inneren Haft- oder Klebeschicht (32) und den sich jeweils daran anschließenden Trägerschichten (26) kleiner ist als die erste Adhäsionskraft (Fₐ₁) zwischen den Artikel- oder Behälteraußenseiten und den äußeren Haft- oder Klebeschichten (28) des Haftelementes (16) an den jeweiligen Haftstellen.

8. Gebinde nach Anspruch 6 oder 7, bei dem die dritte Adhäsionskraft (Fₐ₃) zwischen der inneren Haft- oder Klebeschicht (32) und den sich jeweils daran anschließenden Trägerschichten (26) kleiner ist als die zweite Adhäsionskraft (Fₐ₂) zwischen den Haft- oder Klebeschichten (28) und den sich jeweils daran anschließenden Trägerschichten (26).

9. Gebinde nach einem der Ansprüche 2 bis 8, bei dem im Bereich des Haftelementes (16) eine flächige Schicht als Trennhilfe (38) ausgebildet und mit einem Griffelement (40) versehen ist, das als Zuggriff zum Lösen der Trennhilfe (38) vom Haftelement (16) in einer Zugrichtung (42) quer zum Schichtaufbau und parallel zu den flächigen Schichten (26, 28, 32) angeordnet ist.

10. Gebinde nach Anspruch 9, bei dem die Trennhilfe (38) als zusätzliche vierte bzw. sechste Schicht (36) ausgebildet oder bei der die wenigstens eine Trägerschicht (26) oder eine der Trägerschichten (26) als Trennhilfe (38) ausgebildet und mit einem Griffelement (40) ausgestattet ist.

11. Gebinde nach einem der Ansprüche 2 bis 8, bei dem im Bereich des Haftelementes (16) eine Trennhilfe (38) vorgesehen ist, die mit einem Griffelement (40) versehen ist, das mit einem in eine der flächigen Schichten (26, 28, 32) eingelegten Zugfaden oder einer darin eingelegten Schlaufe verbunden ist, der/die beim Lösen der Trennhilfe (38) vom Haftelement (16) in einer Zugrichtung (42) die jeweilige flächige Schicht (26, 28, 32) zumindest teilweise auftrennt und/oder zerstört.

## Claims

1. A double-sided adhesive bonding element (16) in use with a bundle (10) for an adhesive and detachable connection at the exteriors of at least two articles or containers (12) bonded to each other to form a bundle (10) of at least two articles or containers (12) bonded adhesively to each other, wherein the bonding element (16) comprises at least one carrier layer (26) as well as bonding layers or adhesive layers (28) following planarly on both sides thereto for establishing the bonded connection to the particular exteriors of the joined articles or containers (12), **characterised in that** a first adhesive force (Fₐ₁) between the article exteriors and the bonding layers or adhesive layers (28) of the bonding element (16) at the particular bonding points is greater than a second adhesive force (Fₐ₂) between the bonding layers or adhesive layers (28) and the carrier layer (26).

2. A bundle (10) with at least two articles or containers (12) bonded adhesively to each other at the exteriors, which articles or containers (12) are detachably secured to each other in at least one bonding point by means of at least one double-sided adhesive bonding element (16) according to claim 1.

3. The bundle according to claim 2, in which the at least one carrier layer (26) is formed by a plastic material, in particular, by a plastic film.

4. The bundle according to claim 2 or 3, in which the at least one carrier layer (26) is formed to be concave at least on one side and/or is adapted in its profile to a convex contact point with at least one exterior of an article or container (12).

5. The bundle according to claim 4, in which at least one of the at least two bonding layers or adhesive layers (28) of the bonding element (16) following the carrier layer (26) is formed to be concave and/or is adapted in its profile to a convex contact point with at least one exterior of an article or container (12).

6. The bundle according to one of the claims 2 to 5, in which the bonding element (16) comprises at least five planar layers (26, 28, 32) bonded to each other, wherein an inner bonding layer or adhesive layer (32) is followed on both sides by carrier layers (26) at the outer sides of which in each instance the outer bonding layers or adhesive layers (28) are located that establish the adhesive contact to the exteriors of the articles or containers (12).

7. The bundle according to claim 6, in which a third adhesive force (Fₐ₃) between the inner bonding layer or adhesive layer (32) and the carrier layers (26) in each instance following thereto is less than the first adhesive force (Fₐ₁) between the exteriors of the articles or containers and the outer bonding layers or adhesive layers (28) of the bonding element (16) at the particular bonding points.

8. The bundle according to claim 6 or 7, in which the third adhesive force (Fₐ₃) between the inner bonding layer or adhesive layer (32) and the carrier layers (26) in each instance following thereto is less than the second adhesive force (Fₐ₂) between the bonding layers or adhesive layers (28) and the carrier layers (26) in each instance following thereto.

9. The bundle according to one of the claims 2 to 8, in which a planar layer is designed as a separating aid (38) in the area of the bonding element (16) and is provided with a grip element (40), which is disposed as pulling grip for detaching the separating aid (38) from the bonding element (16) in a pulling direction (42) transverse to the layering and parallel to the planar layers (26, 28, 32).

10. The bundle according to claim 9, in which the separating aid (38) is designed as additional fourth or sixth layer (36), as applicable, or in which the at least one carrier layer (26) or one of the carrier layers (26) is designed as separating aid (38) and is equipped with a grip element (40).

11. The bundle according to one of the claims 2 to 8, in which a separating aid (38) is provided in the area of the bonding element (16) and is provided with a grip element (40), which is connected to a pull thread inserted into one of the planar layers (26, 28, 32) or to a loop inserted thereinto, which pull thread or loop at least partly undoes and/or tears apart the particular planar layer (26, 28, 32) when the separating aid (38) is detached from the bonding element (16) in a pulling direction (42).

## Revendications

1. Elément adhésif double face (16) en utilisation avec un multipack (10) pour la liaison par collage et amovible d'au moins deux articles ou récipients (12) adhérant entre eux, sur leurs faces extérieures, pour réaliser un multipack (10) ayant au moins deux articles ou récipients (12) adhérant entre eux de manière collante, dans lequel ledit élément adhésif (16) comprend au moins une couche de support (26) ainsi que des couches adhésives ou collantes (28) contiguës en nappe, de part et d'autre, à celle-ci pour réaliser les liaisons adhésives aux faces extérieures respectives des articles ou récipients (12) joints, **caractérisé par le fait qu'**une première force d'adhérence (Fₐ₁) entre les faces extérieures des articles et les couches adhésives ou collantes (28) de l'élément adhésif (16) sur les points d'adhérence respectifs est supérieure à une deuxième force d'adhérence (Fₐ₂) entre les couches adhésives ou collantes (28) et la couche de support (26).

2. Multipack (10) comprenant au moins deux articles ou récipients (12) qui adhèrent entre eux de manière collante sur des faces extérieures et qui sont fixés les uns aux autres de manière amovible sur au moins un point d'adhérence au moyen d'au moins un élément adhésif double face (16) selon la revendication 1.

3. Multipack selon la revendication 2, dans lequel ladite au moins une couche de support (26) est formée par une matière plastique, en particulier un film plastique.

4. Multipack selon la revendication 2 ou 3, dans lequel ladite au moins une couche de support (26) est formée de manière à être concave, au moins sur une face, et/ou est adaptée, quant à sa section transversale, à un point de contact convexe avec au moins une face extérieure d'un article ou récipient (12).

5. Multipack selon la revendication 4, dans lequel l'une au moins desdites au moins deux couches adhésives ou collantes (28) de l'élément adhésif (16), qui sont contiguës à la couche de support (26), est formée de manière à être concave, et/ou est adaptée, quant à sa section transversale, à un point de contact convexe avec au moins une face extérieure d'un article ou récipient (12).

6. Multipack selon l'une quelconque des revendications 2 à 5, dans lequel ledit élément adhésif (16) comprend au moins cinq couches plates (26, 28, 32) adhérant entre elles, dans lequel des couches de support (26) sont contiguës de part et d'autre à une couche adhésive ou collante (32) intérieure, et sur les faces extérieures de celles-ci sont situées respectivement les couches adhésives ou collantes (28) extérieures, qui établissent le contact adhésif avec les faces extérieures des articles ou récipients (12).

7. Multipack selon la revendication 6, dans lequel une troisième force d'adhérence (Fₐ₃) entre la couche adhésive ou collante (32) intérieure et les couches de support (26) respectivement contiguës à celle-ci est inférieure à la première force d'adhérence (Fₐ₁) entre les faces extérieures des articles ou récipients et les couches adhésives ou collantes (28) extérieures de l'élément adhésif (16) sur les points d'adhérence respectifs.

8. Multipack selon la revendication 6 ou 7, dans lequel la troisième force d'adhérence (Fₐ₃) entre la couche adhésive ou collante (32) intérieure et les couches de support (26) respectivement contiguës à celle-ci est inférieure à la deuxième force d'adhérence (Fₐ₂) entre les couches adhésives ou collantes (28) et les couches de support (26) respectivement contiguës à celles-ci.

9. Multipack selon l'une quelconque des revendications 2 à 8, dans lequel, au niveau de l'élément adhésif (16), une couche plate est réalisée comme aide à la séparation (38) et est munie d'un élément formant poignée (40) qui, en tant que poignée de traction pour détacher ladite aide à la séparation (38) de l'élément adhésif (16) dans une direction de traction (42), est disposé transversalement à la structure stratifiée et parallèlement aux couches (26, 28, 32) plates.

10. Multipack selon la revendication 9, dans lequel ladite aide à la séparation (38) est conçue en tant que quatrième ou bien sixième couche (36) supplémentaire, ou dans lequel ladite au moins une couche de support (26) ou l'une des couches de support (26) est réalisée en tant qu'aide à la séparation (38) et est munie d'un élément formant poignée (40).

11. Multipack selon l'une quelconque des revendications 2 à 8, dans lequel une aide à la séparation (38) est prévue au niveau de l'élément adhésif (16) et est pourvue d'un élément formant poignée (40) qui est relié à un fil de traction inséré dans l'une des couches (26, 28, 32) plates ou à une boucle y insérée lequel/laquelle, lorsque l'aide à la séparation (38) est détachée de l'élément adhésif (16) dans une direction de traction (42), sépare au moins en partie et/ou détruit la couche (26, 28, 32) plate respective.
